# EUROPÄISCHE PATENTANMELDUNG

(11) **EP 3 379 797 A1**
(43) Veröffentlichungstag der Anmeldung: **26.09.2018**
(21) Anmeldenummer: 18158539.9
(22) Anmeldetag: 26.02.2018
(51) Int. Cl.: H04L 29/06, H04L 9/08, H04L 9/06

(54) **ENTSCHLÜSSELUNGSVORRICHTUNG UND VERWENDUNG UND BETREIBEN DER ENTSCHLÜSSELUNGSVORRICHTUNG MIT EINEM MESSGERÄT**

(30) Priorität: 24.03.2017 DE 102017204985
(71) Anmelder: Hytera Mobilfunk GmbH, 31848 Bad Münder (DE)
(72) Erfinder: Rüstig, Stephan, 31515 Wunstorf (DE); Zeuschner, Michael, 31542 Bad Nenndorf (DE); Ayadi-Miessen, Amina, 30890 Barsinghausen (DE); Holm, Hauke, 24939 Flensburg (DE); Sals, Stefan, 25866 Mildstedt (DE)
(74) Vertreter: Körfer, Thomas

(57) **Zusammenfassung**

Eine Entschlüsselungsvorrichtung, die eine erste Hardware-Komponente (110) und eine zweite Hardware-Komponente (120) aufweist. Während die erste Hardware-Komponente (110) hierbei mindestens einen Entschlüsselungsalgorithmus (111) aufweist, weist die zweite Hardware-Komponente (120) einen Schlüssel (121) auf, der an den Entschlüsselungsalgorithmus (111) der ersten Hardware-Komponente (110) übergeben wird. Eine solche Entschlüsselungsvorrichtung wird insbesondere dafür verwendet, das Signal eines verschlüsselten Funkkanals zwischen einer Basisstation (130) und einem Endgerät (140), welches mithilfe eines Messgeräts (150) gemessen wird, zu entschlüsseln.

## Beschreibung

Die Erfindung betrifft eine Entschlüsselungsvorrichtung zum Entschlüsseln eines verschlüsselten Signals, welches mit einem Messgerät gemessen werden soll sowie die entsprechende Verwendung der Entschlüsselungsvorrichtung mit einem Messgerät und ein entsprechendes Betriebsverfahren.

Im Allgemeinen wächst der Bedarf an Datenübertragungssystemen und damit insbesondere auch der Bedarf an sicheren Kommunikationssystemen, d.h., an Systemen, in denen die auszutauschende Daten entsprechend verschlüsselt übertragen werden. Hieraus ergibt sich auch ein Bedarf an entsprechenden Entschlüsselungsvorrichtungen, insbesondere an solchen, die in Verbindungen mit einem Messgerät verwendet werden können, um die korrekte Funktion des verschlüsselten Datenübertragungssystems nachweisen zu können.

Das Dokument EP 0 778 705 B1 zeigt eine Ver- sowie eine Entschlüsselungsvorrichtung für die Übertragung digitaler Signale. Insbesondere an der im vorgenannten Dokument gezeigten Entschlüsselungsvorrichtung ist jedoch nachteilig, dass diese in Verbindung mit einem Messgerät nicht verwendet werden kann.

Demnach ist es die Aufgabe der vorliegenden Erfindung, eine Entschlüsselungsvorrichtung zur Verfügung zu stellen, die vorteilhafterweise in Verbindung mit einem Messgerät verwendet werden kann.

Die vorgenannte Aufgabe wird durch die Entschlüsselungsvorrichtung gemäß Anspruch 1, ein entsprechendes Betriebsverfahren nach Anspruch 9 sowie eine entsprechende Verwendung gemäß Anspruch 10 gelöst. Dabei enthalten die jeweils abhängigen Ansprüche vorteilhafte Weiterbildungen der Erfindung.

Ein erster Aspekt der Erfindung ist eine Entschlüsselungsvorrichtung, die eine erste Hardware-Komponente und eine zweite Hardware-Komponente aufweist. Hierbei weist die erste Hardware-Komponente mindesten einen Entschlüsselungsalgorithmus auf, während die zweite Hardware-Komponente einen Schlüssel aufweist, der an den Entschlüsselungsalgorithmus der ersten Hardware-Komponente übergeben wird. Vorteilhafterweise wird mithilfe der beiden separierbaren Hardware-Komponenten der Entschlüsselungsvorrichtung einem Missbrauch der Entschlüsselungsvorrichtung vorgebeugt, da einerseits der mindestens eine Entschlüsselungsalgorithmus getrennt vom entsprechenden Schlüssel aufbewahrt werden kann, und andererseits der mindestens eine Entschlüsselungsalgorithmus nicht als relativ leicht kopierbare Software-Version vorliegt und zusätzlich eine Verschlüsselung der ersten Hardware-Komponente selbst vorgenommen werden kann.

Vorzugsweise ist der mindestens eine Entschlüsselungsalgorithmus der ersten Hardware-Komponente der Entschlüsselungsvorrichtung von außen nicht auslesbar. Dies kann vorteilhafterweise durch die oben genannte Verschlüsselung, insbesondere Hardware-Verschlüsselung, der ersten Hardware-Komponente erreicht werden.

Weiter vorzugsweise weist die zweite Hardware-Komponente der Entschlüsselungsvorrichtung mindestens einen Parameter, insbesondere mindestens einen zeitabhängigen Parameter, auf, der an den Entschlüsselungsalgorithmus der ersten Hardware-Komponente übergeben wird.

Weiterhin ist es besonders vorteilhaft, wenn mithilfe des mindestens einen Entschlüsselungsalgorithmus der ersten Hardware-Komponente ein Schlüsselstrom erzeugt wird, der an die zweite Hardware-Komponente übergeben wird. Vorzugsweise umfasst der Schlüsselstrom das oben genannte Ergebnis des mindestens einen Entschlüsselungsalgorithmus.

Weiter vorzugsweise weist die zweite Hardware-Komponente eine Verknüpfung, insbesondere eine XOR-Verknüpfung, auf, um das von einem Messgerät gemessene verschlüsselte Signal durch Verknüpfen mit dem Schlüsselstrom zu entschlüsseln. Auf diese Weise gelangt man vorteilhafterweise zu einer besonders effizienten Entschlüsselung.

Weiterhin ist es vorteilhaft, wenn die erste Hardware-Komponente und/oder die zweite Hardware-Komponente jeweils getrennt oder gemeinsam einen ASIC (Application Specific Integrated Circuit), einen FPGA (Field Programmable Gate Array) und/oder einen (CPLD) (Complex Programmable Logic Device) aufweisen.

Ferner weist die erste Hardware-Komponente der Entschlüsselungsvorrichtung vorzugsweise einen Ausleseschutz auf, der bei Deaktivierung und/oder dem Versuch der Deaktivierung den mindestens einen Entschlüsselungsalgorithmus löscht. Hierdurch wird ein Missbrauch der Entschlüsselungsvorrichtung vorteilhafterweise besonders erschwert.

Weiterhin ist es vorteilhaft, wenn die Entschlüsselungsvorrichtung, insbesondere die erste und/oder die zweite Hardware-Komponente der Entschlüsselungsvorrichtung, eine Passwort-Kontroll-Einrichtung aufweist, so dass die Verwendung der Entschlüsselungsvorrichtung bzw. die erste und/oder zweite Hardware-Komponente derselben ausschließlich mithilfe eines korrekten Passworts möglich ist.

Ein zweiter Aspekt der Erfindung ist ein entsprechendes Betriebsverfahren, welches auch alle vorstehend als vorteilhaft oder bevorzugt genannten Weiterbildungen beinhalten kann.

Ein dritter Aspekt der Erfindung ist eine Verwendung der Entschlüsselungsvorrichtung gemäß dem ersten Aspekt der Erfindung in Verbindung mit einem ein verschlüsseltes Signal messenden Messgerät.

Vorzugsweise wird zum Entschlüsseln des verschlüsselten Signals die Entschlüsselungsvorrichtung gemäß dem ersten Aspekt der Erfindung in Verbindung mit dem Messgerät verwendet.

Exemplarische Ausführungsbeispiele der Erfindung sind in den Zeichnungen nur beispielhaft dargestellt und werden im Folgenden näher beschrieben.

In der Zeichnung zeigen
- Fig. 1: das beispielhafte Blockschaltbild eines Datenübertragungssystems, bei dem der verschlüsselte Funkkanal mithilfe eines Messgeräts gemessen und mithilfe eines Ausführungsbeispiels der erfindungsgemäßen Entschlüsselungsvorrichtung entschlüsselt wird;
- Fig. 2: das beispielhafte Blockschaltbild eines Ausführungsbeispiels einer erfindungsgemäßen Entschlüsselungsvorrichtung in Verbindung mit einem Messgerät;
- Fig. 3: das beispielhafte Blockschaltbild der ersten Hardware-Komponente eines Ausführungsbeispiels der erfindungsgemäßen Entschlüsselungsvorrichtung; und
- Fig. 4: das beispielhafte Blockschaltbild der ersten Hardware-Komponente eines Ausführungsbeispiels der erfindungsgemäßen Entschlüsselungsvorrichtung mit konkreten Komponenten.

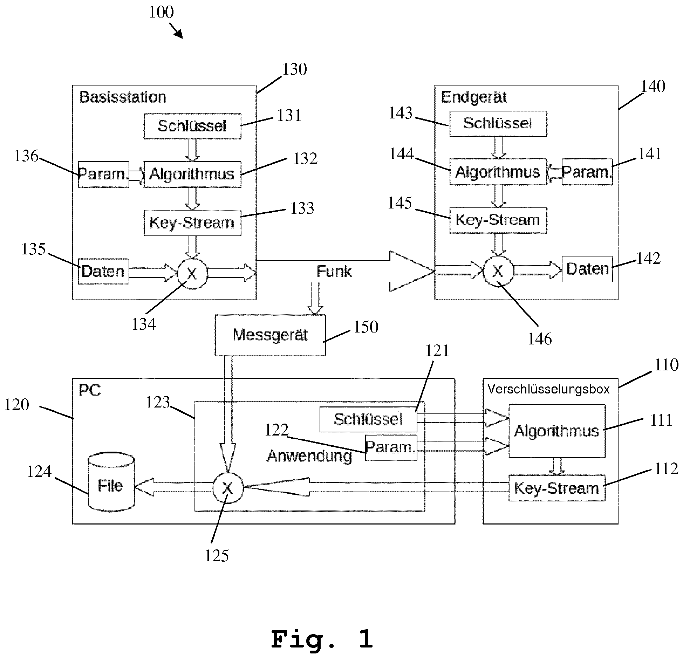

Fig. 1 illustriert eine beispielhafte Anordnung 100 aus einem Datenübertragungssystem, das aus einer Basisstation 130 und einem Endgerät 140 besteht, und einem Messgerät 150, das die auf der Luftschnittstelle zwischen Basisstation 130 und Endgerät 140 übertragenen Signale aufzeichnet. Da es sich bei den übertragenen Signalen um verschlüsselte Signale handelt, umfasst die Anordnung 100 des Weiteren eine Entschlüsselungsvorrichtung, die eine erste Hardware-Komponente 110, im Folgenden insbesondere auch Verschlüsselungsbox 110 genannt, sowie eine zweite Hardware-Komponente 120, insbesondere einen Personal Computer (PC) 120, aufweist. Die Entschlüsselungsvorrichtung macht es in Verbindung mit dem Messgerät 150 möglich, die auf der Luftschnittstelle übertragenen Signale zu entschlüsseln.

Bei den zwischen Basisstation 130 und Endgerät 140 über die Luft übertragenen Signalen kann es sich beispielsweise um Datensignale, Sprachsignale, Signale für Signalisierungszwecke oder andere Signalarten handeln. Weiterhin kann es sich bei dem entsprechenden Kommunikationssystem um ein Bündelfunk-System, insbesondere nach dem TETRA-Standard (Terrestrial Trunked Radio) handeln. Wie bereits beschrieben, werden die auf der Luftschnittstelle übertragenen Signale verschlüsselt, um das Mithören durch Dritte zu verhindern; in diesem Zusammenhang spricht man auch von "Air Interface Encryption" (AIE, Luft Schnittstellen Verschlüsselung).

Zunächst werden die von der Basisstation 130 zum Endgerät 140 zu übertragenden Daten 135 verschlüsselt. Hierfür werden die Daten 135 seitens der Basisstation 130 mit einem Schlüsselstrom bzw. Key-Stream 133 mithilfe einer entsprechenden Verknüpfung 134, insbesondere einer XOR-Verknüpfung verknüpft. Der Key-Stream 133 wird mithilfe eines Algorithmus 132 erzeugt, der zur Erzeugung des Key-Streams 133 einen Schlüssel 131 sowie mindestens einen Parameter, insbesondere mindestens einen zeitabhängigen Parameter, benötigt. Anschließend werden die mit dem Key-Stream 133 verknüpften Daten 135 bzw. die Daten 135 in verschlüsselter Form drahtlos zum Endgerät 140 übertragen.

Diese verschlüsselten Daten werden dann vom Endgerät 140 empfangen und durch Verknüpfen mithilfe einer Verknüpfung 146, insbesondere mithilfe einer XOR-Verknüpfung, mit einem entsprechenden Key-Stream 145 entschlüsselt. Die entschlüsselten Daten 142 entsprechen den Daten 135. Der Key-Stream 145 wird mithilfe eines Algorithmus 144 erzeugt, der zur Erzeugung des Key-Streams 145 einen Schlüssel 143 sowie vorzugsweise auch mindestens einen Parameter 141, insbesondere mindestens einen zeitabhängigen Parameter, benötigt.

Um sicherzustellen, dass die Daten 142 nach der Entschlüsselung den Daten 135 vor der Verschlüsselung entsprechen, müssen insbesondere sowohl der Schlüssel 131 sowie bevorzugt der mindestens eine Parameter 136 der Basisstation 130 als auch der Schlüssel 143 und der mindestens eine Parameter 141 des Endgeräts 140 jeweils aufeinander abgestimmt sein.

Wie bereits erwähnt werden die über den verschlüsselten Funkkanal übertragenen Signale mit dem Messgerät 150 aufgenommen. Zum Entschlüsseln des verschlüsselten Signals weist der PC 120 eine Anwendung 123 auf, die die verschlüsselten Daten mithilfe einer Verknüpfung 125, insbesondere mithilfe einer XOR-Verknüpfung, mit einem entsprechenden Key-Stream 112 verknüpft und die Daten somit entschlüsselt. Die entschlüsselten Daten werden anschließend in einer Datei bzw. in einem File 124, das auf dem PC 120 gespeichert ist, abgelegt.

In diesem Kontext ist es besonders wichtig zu erwähnen, dass der Key-Stream 112 sowie der zu dessen Erzeugung notwendige Algorithmus 111 bevorzugt nicht Teil des PC 120, sondern als Teil der Verschlüsselungsbox 110 vom PC 120 separiert sind.

Dementsprechend sind zwei wesentliche Grundelemente der Entschlüsselung, der Algorithmus 111 und die damit verbundene Erzeugung des Key-Streams 112, in einer separaten Hardware-Komponente, der Verschlüsselungsbox 110, gekapselt.

Dies ist besonders vorteilhaft, da ein Anwender so das Messgerät 150 in Verbindung mit der Entschlüsselungsvorrichtung bestehend aus der Verschlüsselungsbox 110 und dem PC 120 zwar nutzen kann, der entsprechende Algorithmus 111 ihm aber verborgen bleibt. Dies führt dazu, dass insbesondere der sicherheitsrelevante Algorithmus 111 vor Verlust, Diebstahl sowie allgemeinem Missbrauch optimal geschützt ist.

Es sei außerdem darauf hingewiesen, dass es sich bei der Verschlüsselungsbox 110 insbesondere um ein FPGA handeln kann. Hierbei kann der Algorithmus 111 entweder direkt auf dem FPGA gespeichert sein oder auf einem externen Speicher liegen, der mit dem FPGA in Verbindung steht. Zusätzlich kann der Algorithmus 111 in beiden Fällen verschlüsselt werden, wobei der entsprechende Schlüssel fest in das FPGA eingebrannt sein kann. Dieser fest eingebrannte Schlüssel kann zusätzlich derart gestaltet sein, dass er nicht wieder ausgelesen werden kann. Zudem kann im FPGA vorzugsweise eine Ausleseschutz aktiviert werden, so dass ein Deaktivieren bzw. schon der Versuch des Deaktivierens des Ausleseschutzes den Algorithmus 111 unwiderruflich aus dem FPGA bzw. dem externen Speicher löscht.

Auch wenn der Algorithmus 111 stets vor dem Anwender verborgen bleibt, kann es dennoch vorteilhaft sein, auch dessen Verwendung beispielsweise durch eine entsprechende Passwort-Kontroll-Einrichtung vor unbefugtem Zugriff Dritter zu schützen. Dementsprechend ist eine Verwendung der Verschlüsselungsbox 110 nur möglich, wenn der Anwender diese freischaltet, indem er sich vorzugsweise mithilfe eines korrekten Passworts legitimiert. Alternativ könnte auch ein Zertifizierungsverfahren zum Einsatz kommen.

Während der Algorithmus 111 und die Erzeugung des Key-Streams 112 in der Verschlüsselungsbox 110 gekapselt sind, werden dem Algorithmus 111 zum Entschlüsseln der verschlüsselten Daten 135 ein entsprechender Schlüssel 121 sowie bevorzugt mindestens ein Parameter 122, insbesondere mindestens ein zeitabhängiger Parameter, mithilfe der Anwendung 123 des PC 120 übergeben.

Um sicherzustellen, dass die Daten, die nach der Entschlüsselung im File 124 auf dem PC 120 abgelegt werden, den Daten 135 vor der Verschlüsselung entsprechen, müssen insbesondere sowohl der Schlüssel 131 sowie der mindestens eine Parameter 136 der Basisstation 130 als auch der Schlüssel 121 und der mindestens eine Parameter 122 der Anwendung 123 des PC 120 jeweils aufeinander abgestimmt sein. Zudem sei angemerkt, dass die Entschlüsselung auch vollständig in der Verschlüsselungsbox 110 selbst möglich ist.

Man erkennt, dass sich aus der erfindungsgemäßen Entschlüsselungsvorrichtung, die insbesondere aus zwei Hardware-Komponenten besteht, im besonderen Hinblick auf die einfache Handhabung des Messsystems einige Vorteile ergeben, welche an dieser Stelle zusammengefasst werden.

Während sich der Anwender nicht um eine Lizenz für den mindestens einen Algorithmus kümmern muss, muss er diesen auch nicht selbst implementieren. Des Weiteren ist der Anwender auch nicht für die Geheimhaltung des mindestens einen Algorithmus verantwortlich. Ferner muss sich der Anwender auch nicht um die besondere Handhabung der Algorithmen kümmern, welche beispielsweise die Schulung von Mitarbeitern, den besonderen Schutz vor Diebstahl, den Schutz vor Missbrauch durch Mitarbeiter sowie den besonderen Schutz vor informationstechnologischen Angriffen umfasst.

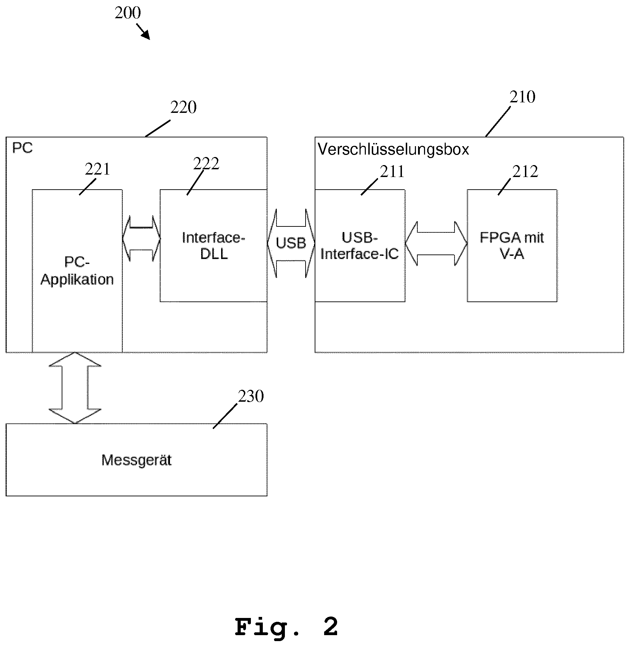

Weiterhin zeigt Fig. 2 ein weiteres beispielhaftes Blockschaltbild 200 einer erfindungsgemäßen Entschlüsselungsvorrichtung, die in Verbindung mit einem Messgerät 230 verwendet wird. Mithilfe des Messgeräts 230 werden Signale, insbesondere verschlüsselte Funksignale, und damit auch die entsprechenden Daten gemessen und/oder aufgezeichnet. Hierbei kann es sich beispielsweise auch um digitale Sprachsignale handeln.

Des Weiteren steht ein PC 220 mit dem Messgerät 230 in Verbindung. Der PC 220 weist eine PC-Applikation 221 auf, die insbesondere der Speicherung, Analyse und Darstellung des mithilfe des Messgeräts 230 empfangenen Signals dient.

Zudem weist der PC 220 vorzugsweise eine Interface-DLL 222 (Dynamic Link Library, dynamische Verbindungs-Bibliothek) auf, die mit der PC-Applikation 221 in Verbindung steht. Die Interface-DLL 222 ist dabei insbesondere eine Bibliothek, vorzugsweise eine Software-Bibliothek, welche es der PC-Applikation 221 ermöglicht, auf die Verschlüsselungsbox 210 zuzugreifen. Hieraus ergibt sich der Vorteil, dass insbesondere ein Wechsel der entsprechenden Schnittstelle zwischen dem PC 220 und der Verschlüsselungsbox 210, beispielsweise von USB (Universal Serial Bus, Allgemeiner serieller Bus) auf ein Netzwerk, besonders einfach zu handhaben ist, da lediglich ein Austausch bzw. eine Anpassung der Interface-DLL 222 erforderlich ist.

Weiterhin weist die Verschlüsselungsbox 210 vorzugsweise eine USB-Schnittstelle 211 und ein FPGA 212 auf, das mit der USB-Schnittstelle 211 in Verbindung steht.

Nun werden im gezeigten Ausführungsbeispiel die vom Messgerät 230 empfangenen Daten an die PC-Applikation 221 weitergereicht, welche insbesondere die benötigten Schlüssel und Parameter ermittelt und über die Interface-DLL 222 bei der Verschlüsselungsbox 210 den für die Entschlüsselung erforderlichen Key-Stream anfragt. Diese Anfrage sendet die Interface-DLL 222 über die USB-Schnittstelle 211, die mit der Interface-DLL 222 in Verbindung steht, an die Verschlüsselungsbox 210. Diese Anfrage reicht die USB-Schnittstelle 211 an das FPGA 212 weiter, welches insbesondere Ver- bzw. Entschlüsselungsalgorithmen aufweist. Die Anfrage wird im FPGA verarbeitet und das Resultat bzw. der entsprechende Key-Stream dann an die USB-Schnittstelle 211 übergeben. Über die USB-Schnittstelle 211 wird dieser Key-Stream an die Interface-DLL 222 gesendet, welche den Key-Stream an die PC-Applikation 221 weiterreicht. Diese ist nun in der Lage, die verschlüsselten Daten mithilfe des Key-Streams zu entschlüsseln.

Alternativ könnten statt der Interface-DLL 222 die Schnittstelle auch direkt in die Software integriert werden.

Außerdem sei darauf hingewiesen, dass die Verwaltung und Ablage der Schlüssel im Allgemeinen auch in der Verschlüsselungsbox erfolgen kann. Zudem kann die PC-Applikation derart angepasst werden, dass sie direkt am Messgerät verwendet werden kann. Alternativ oder zusätzlich zur USB-Schnittstelle der Verschlüsselungsbox können auch andere Schnittstellen vorgesehen werden, beispielsweise LAN (Local Area Network), WLAN (Wireless Local Area Network), Bluetooth, RS232, SPI (Serial Peripheral Interface), I²C (Inter-Integrated Circuit) etc. Ferner kann die Verschlüsselungsbox auch in das Messgerät integriert werden. Zudem kann die Verschlüsselungsbox derart ausgebildet sein, dass das Entschlüsseln selbst in der Verschlüsselungsbox möglich ist.

Des Weiteren sei angemerkt, dass weder die Anwendung der Entschlüsselungsvorrichtung noch die der Verschlüsselungsbox auf Funknetze beschränkt sind, auch wenn hier beispielhaft ein Funkkanal gemessen wird. Zudem sei erwähnt, dass neben dem bereits erwähnten TETRA-Funksystem auch andere Funksysteme, beispielsweise DMR (Digital Mobile Radio), GSM (Global System for Mobile Communications), LTE (Long Term Evolution) und andere, in Frage kommen, für die die Entschlüsselungsvorrichtung, insbesondere die Verschlüsselungsbox, implementiert werden kann.

In diesem Kontext kann die Entschlüsselungsvorrichtung, insbesondere die Verschlüsselungsbox, zusätzlich eine Aufnahmeeinheit für eine SIM-Karte (Subscriber Identity Module) aufweisen, so dass insbesondere auch die Entschlüsselung einer Übertragung, welche mithilfe einer Ende-zu-Ende-Verschlüsselung verschlüsselt wurde, möglich ist. Dies ist besonders vorteilhaft, da Ende-zu-Ende-Verschlüsselungen typischerweise Algorithmen umfassen, die zumindest zum Teil ausschließlich dem Anwender selbst bekannt sind.

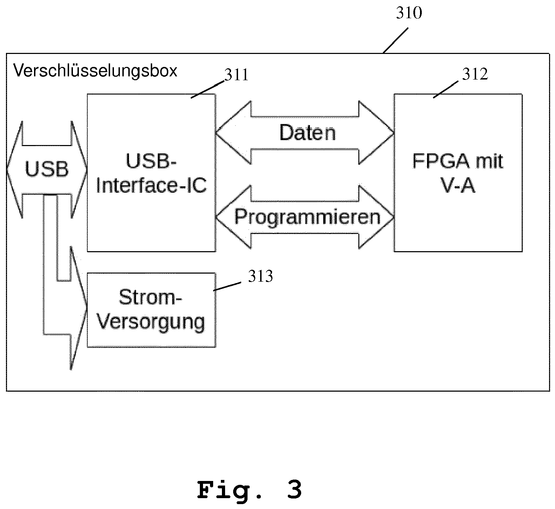

Weiterhin erkennt man gemäß Fig. 3, die eine Verschlüsselungsbox 310 zeigt, welche im Wesentlichen der Verschlüsselungsbox 210 der Fig. 2 entspricht, dass die Verschlüsselungsbox 310 neben einer USB-Schnittstelle 311 und einem FPGA 312 mit Ver- bzw. Entschlüsselungsalgorithmen eine Stromversorgung 313 für die elektrische Versorgung der Verschlüsselungsbox 310 aufweist. Die Stromversorgung 313 bezieht dabei ihre Energie vorzugsweise von der USB-Schnittstelle 311 bzw. von dem Gerät, das mit dieser verbunden ist, wobei es sich bei dem Gerät insbesondere um einen PC handelt.

Zudem illustriert Fig. 3, dass zwischen der USB-Schnittstelle 311 und dem FPGA 312 nicht nur Daten, insbesondere Daten zur Entschlüsselung, ausgetauscht werden, sondern das FPGA 312 über die USB-Schnittstelle 311 auch programmiert werden kann.

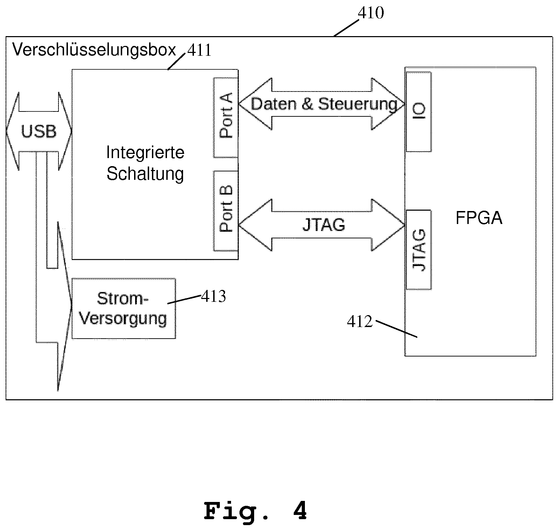

Abschließend zeigt Fig. 4 eine Verschlüsselungsbox 410, die im Wesentlichen zwar der Verschlüsselungsbox 210 der Fig. 2 bzw. der Verschlüsselungsbox 310 der Fig. 3 entspricht, wobei aber in diesem Fall konkrete Komponenten für die Implementierung der Verschlüsselungsbox 410 dargestellt sind.

Als USB-Schnittstelle wird gemäß Fig. 4 eine integrierte Schaltung 411 verwendet, während für die Implementierung insbesondere der Kernfunktionalität der Verschlüsselungsbox 410 ein FPGA 412 verwendet wird. Zudem weist die Verschlüsselungsbox 410 eine Stromversorgung 413 auf, die ihre Energie vorzugsweise von der integrierten Schaltung 411 für die USB-Schnittstelle bzw. von dem Gerät, das mit der USB-Schnittstelle verbunden ist, bezieht, wobei es sich bei dem Gerät insbesondere um einen PC handelt.

Man erkennt weiterhin, dass ein erstes Tor (Port), insbesondere der Port A, der integrierten Schaltung 411 für die USB-Schnittstelle mit den Ein- bzw. Ausgängen (IO) des FPGA 412 verbunden sind, wobei über diese Verbindung Daten sowie Steuerungsbefehle, insbesondere Daten und Steuerungsbefehle betreffend die Entschlüsselung, übertragen werden.

Ferner ist ein zweites Tor (Port), insbesondere der Port B, der integrierten Schaltung 411 über eine Programmierschnittstelle, vorzugsweise eine JTAG-Schnittstelle (Joint Test Action Group), entsprechend mit dem FPGA 412 verbunden, um das FPGA 412 programmieren zu können.

Alle in den Ansprüchen beanspruchten Merkmale, alle in der Beschreibung beschriebenen Merkmale oder alle in der Zeichnung gezeichneten Merkmale sind im Rahmen der Erfindung beliebig miteinander kombinierbar.

## Patentansprüche

1. Eine Entschlüsselungsvorrichtung,
wobei die Entschlüsselungsvorrichtung eine erste Hardware-Komponente (110) und eine zweite Hardware-Komponente (120)aufweist,
wobei die erste Hardware-Komponente (110) mindestens einen Entschlüsselungsalgorithmus (111) aufweist und
wobei die zweite Hardware-Komponente (120) einen Schlüssel (121)aufweist, der an den Entschlüsselungsalgorithmus (111) der ersten Hardware-Komponente (110) übergebbar ist.

2. Die Entschlüsselungsvorrichtung nach Anspruch 1, wobei der Entschlüsselungsalgorithmus (111) von außen nicht auslesbar ist.

3. Die Entschlüsselungsvorrichtung nach Anspruch 1 oder 2,
wobei die zweite Hardware-Komponente (120) mindestens einen Parameter (122), insbesondere mindestens einen zeitabhängigen Parameter, aufweist, der an den Entschlüsselungsalgorithmus (111) der ersten Hardware-Komponente (110) übergebbar ist.

4. Die Entschlüsselungsvorrichtung nach einem der Ansprüche 1 bis 3,
wobei die ersten Hardware-Komponente (110) mithilfe des mindestens einen Entschlüsselungsalgorithmus (111) einen Schlüsselstrom (112) erzeugt, der an die zweite Hardware-Komponente (120) übergeben wird.

5. Die Entschlüsselungsvorrichtung nach Anspruch 4, wobei die zweite Hardware-Komponente (120) eine Verknüpfung (125), insbesondere eine XOR-Verknüpfung, aufweist, um das von einem Messgerät (150) gemessene verschlüsselte Signal durch Verknüpfen mit dem Schlüsselstrom (112) zu entschlüsseln.

6. Die Entschlüsselungsvorrichtung nach einem der Ansprüche 1 bis 5,
wobei die erste Hardware-Komponente (110) und/oder die zweite Hardware-Komponente (120) jeweils getrennt oder gemeinsam einen ASIC (Application Specific Integrated Circuit) und/oder einen FPGA (Field Programmable Gate Array) (312) und/oder einen CPLD (Complex Programmable Logic Device) aufweist.

7. Die Entschlüsselungsvorrichtung nach einem der Ansprüche 1 bis 6,
wobei die erste Hardware-Komponente (110) einen Ausleseschutz aufweist, der bei Deaktivierung und/oder dem Versuch der Deaktivierung den mindestens einen Entschlüsselungsalgorithmus (111) löscht.

8. Die Entschlüsselungsvorrichtung nach einem der Ansprüche 1 bis 7,
mit einer Passwort-Kontroll-Einrichtung, so dass das Betreiben der Entschlüsselungsvorrichtung ausschließlich mithilfe eines korrekten Passworts möglich ist.

9. Verfahren zum Betreiben einer Entschlüsselungsvorrichtung,
wobei die Entschlüsselungsvorrichtung eine erste Hardware-Komponente (110) und eine zweite Hardware-Komponente (120)aufweist,
wobei die erste Hardware-Komponente (110) mindestens einen Entschlüsselungsalgorithmus (111) betreibt und
wobei die zweite Hardware-Komponente (120) einen Schlüssel (121)aufweist, der an den Entschlüsselungsalgorithmus (11) der ersten Hardware-Komponente (110) übergeben wird.

10. Eine Verwendung einer Entschlüsselungsvorrichtung nach einem der Ansprüche 1 bis 8 in Verbindung mit einem ein verschlüsseltes Signal messenden Messgerät (150).

11. Die Verwendung nach Anspruch 10,
wobei zum Entschlüsseln des verschlüsselten Signals die Entschlüsselungsvorrichtung nach einem der Ansprüche 1 bis 8 in Verbindung mit dem Messgerät (150) verwendet wird.
